(19) **Europäisches Patentamt / European Patent Office / Office européen des brevets**

(11) **EP 1 495 622 B1**

(12) **FASCICULE DE BREVET EUROPEEN**

(45) Date de publication et mention de la délivrance du brevet:
**25.03.2009 Bulletin 2009/13**

(21) Numéro de dépôt: **03746340.3**

(22) Date de dépôt: **11.04.2003**

(51) Int Cl.:
*H04L 29/06* *(2006.01)*

(86) Numéro de dépôt international:
**PCT/FR2003/001169**

(87) Numéro de publication internationale:
**WO 2003/088612 (23.10.2003 Gazette 2003/43)**

(54) **Procédé d'authentification anonyme d'un émetteur de données**

Verfahren zur anonymen Authentifizierung eines Datensenders

Method for the anonymous authentication of a data transmitter

(84) Etats contractants désignés:
**DE FR GB IT**

(30) Priorité: **12.04.2002 FR 0204840**

(43) Date de publication de la demande:
**12.01.2005 Bulletin 2005/02**

(73) Titulaire: **Thomson Licensing**
**92100 Boulogne-Billancourt (FR)**

(72) Inventeurs:
- **ANDREAUX, Jean-Pierre**
  **F-35000 Rennes (FR)**
- **DIEHL, Eric**
  **F-35340 Liffré (FR)**
- **DURAND, Alain**
  **F-35000 Rennes (FR)**

(74) Mandataire: **Berthier, Karine et al**
**THOMSON,**
**European Patent Operations,**
**46 Quai Alphonse Le Gallo**
**92648 Boulogne Cédex (FR)**

(56) Documents cités:
**US-A- 5 815 665**

- **MENEZES ET AL: "Handbook of applied cryptography" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, pages 400-405, XP002143934 ISBN: 0-8493-8523-7**
- **SCHECHTER S ET AL: "ANONYMOUS AUTHENTICATION OF MEMBERSHIP IN DYNAMIC GROUPS" FINANCIAL CRYPTOGRAPHY. INTERNATIONAL CONFERENCE, XX, XX, 22 février 1999 (1999-02-22), pages 184-195, XP001006339**

**Description**

Domaine de l'invention

La présente invention concerne l'échange sécurisé de données à travers un réseau reliant différents dispositifs et l'authentification de la source de données émises sur un réseau.

Etat de la technique

Dans certains cas, il est nécessaire pour un dispositif récepteur de données d'être sûr que l'émetteur qui a diffusé les données était bien autorisé à le faire par un tiers de confiance sans que le récepteur des données ne connaisse l'identité de l'émetteur, les données étant également susceptibles d'être relayées par un dispositif intermédiaire. Or tous les schémas connus d'authentification d'un émetteur de données impliquent que le récepteur des données connaisse l'émetteur. Le document « Handbook of Applied Cryptography », de A. Menezes, P. van Oorschot et S. Vanstone, CRC Press, 1997, décrit notamment au chapitre 10.3.2 "Challenge-response by symmetric-key techniques" des mécanismes d'authentification dans lesquels les entités qui s'authentifient connaissent l'identité de l'autre entité ou partagent un secret avec cette autre entité.

Exposé de l'invention

Un but de l'invention est donc de proposer une méthode permettant à un émetteur de données de prouver qu'il était bien autorisé à émettre les données par un tiers de confiance sans que le récepteur des données ne connaisse l'identité de l'émetteur.

A cet effet, l'invention concerne un procédé permettant de vérifier que des données reçues par un récepteur ont été envoyées par un émetteur autorisé par un tiers de confiance, l'émetteur et le récepteur étant raccordés à un réseau numérique. Selon l'invention, un identifiant des données envoyées par l'émetteur est envoyé avec lesdites données et le procédé comprend les étapes consistant, pour le récepteur, à :

(a) générer un nombre aléatoire ;
(b) diffuser sur le réseau ledit nombre aléatoire et ledit identifiant ;
(c) recevoir de l'émetteur une réponse calculée en appliquant une première fonction audit nombre aléatoire et audit identifiant ; et
(d) vérifier la réponse reçue en appliquant une seconde fonction à la réponse reçue, audit nombre aléatoire et audit identifiant ;

la première fonction ayant été au préalable délivrée à l'émetteur par le tiers de confiance et la seconde fonction étant une fonction de vérification du résultat de la première fonction, délivrée au préalable par le tiers de confiance au récepteur.

L'émetteur peut être soit l'émetteur initial des données dans le réseau, soit un intermédiaire entre l'émetteur initial et le récepteur des données qui a par exemple stocké les données émises par l'émetteur initial.

Selon un mode de réalisation de l'invention, le récepteur interdit l'accès aux données si la réponse reçue à l'étape (c) n'est pas correcte ou si aucune réponse n'est reçue après l'expiration d'un délai prédéterminé à compter de l'émission du nombre aléatoire.

L'identifiant des données envoyées par l'émetteur est préférentiellement un nombre aléatoire généré par l'émetteur initial des données dans le réseau et attaché à ces données par l'émetteur initial. Bien entendu, cet identifiant ne donne aucune information sur l'identité de l'émetteur.

L'invention concerne également un procédé pour prouver que des données envoyées à un récepteur ont été émises par un émetteur autorisé par un tiers de confiance, l'émetteur et le récepteur étant raccordés à un réseau numérique. Selon cet aspect de l'invention, un identifiant des données envoyées par l'émetteur est envoyé avec lesdites données et le procédé comprend les étapes consistant, pour l'émetteur à :

(a) recevoir du récepteur un nombre aléatoire et ledit identifiant ;
(b) calculer une réponse en appliquant une première fonction audit nombre aléatoire et audit identifiant ;
(c) envoyer la réponse au récepteur ;

ladite réponse étant susceptible d'être vérifiée par le récepteur en appliquant une seconde fonction à la réponse reçue, audit nombre aléatoire et audit identifiant ; la première fonction ayant été au préalable délivrée à l'émetteur par le tiers de confiance et la seconde fonction étant une fonction de vérification du résultat de la première fonction, délivrée au préalable par le tiers de confiance au récepteur.

Selon le principe de l'invention, un tiers de confiance délivre à tous les dispositifs susceptibles d'être des émetteurs initiaux ou intermédiaires dans un réseau, la première fonction permettant de calculer la réponse dans le cadre du procédé ci-dessus. Le tiers de confiance délivre également à tous les dispositifs susceptibles d'être des récepteurs dans le réseau, la seconde fonction permettant de vérifier la réponse calculée à l'aide de la première fonction.

Brève description des dessins

L'invention sera mieux comprise à la lecture de la description qui va suivre, donnée uniquement à titre d'exemple et faite en se référant aux dessins annexés sur lesquels :

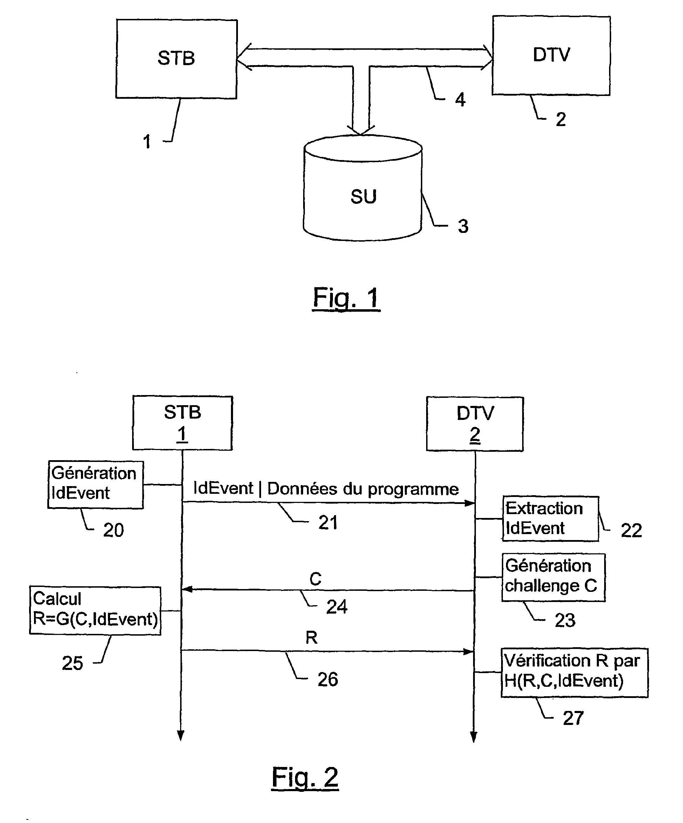

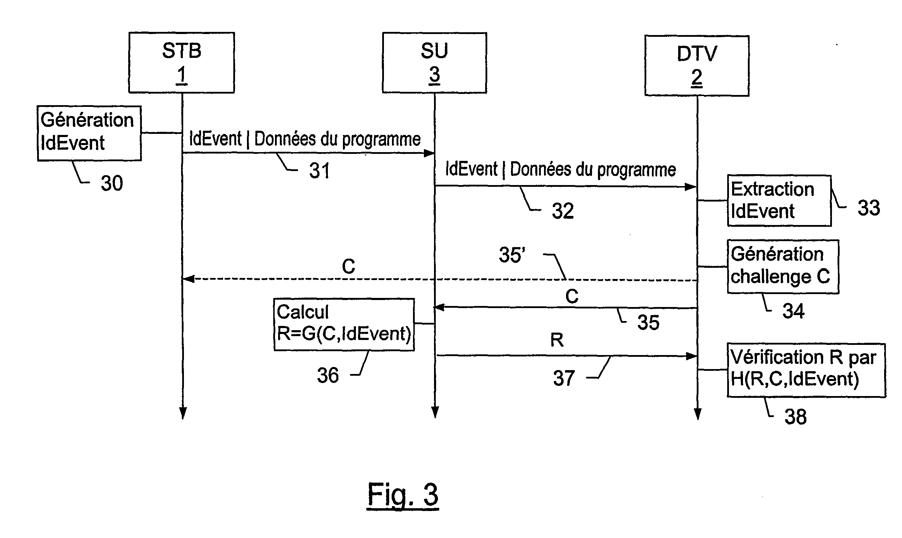

- la figure 1 représente un réseau numérique domestique dans lequel est mise en oeuvre l'invention ;
- les - figures 2 et 3 illustrent deux exemples de mises en oeuvre de l'invention.

Description détaillée de modes de réalisation de l'invention

Sur la base du principe de l'invention exposé ci-dessus, plusieurs scénarios sont possibles.

Selon un premier scénario, un premier émetteur, que nous appellerons Alice, et un second émetteur, que nous appellerons Charlie, diffusent des messages respectivement appelés $M_A$ et $M_C$ sur un réseau auquel est raccordé un récepteur, que nous appellerons Bob. Alice diffuse avec le message $M_A$ un identifiant $IdEvent_A$ qui identifie le message $M_A$ et Charlie diffuse avec le message $M_C$ un identifiant $IdEvent_C$ qui identifie le message $M_C$.

Alice et Charlie qui sont tous deux raccordés au réseau reçoivent respectivement les messages $M_C$ et $M_A$ émis par l'autre émetteur du réseau mais ils ne les conservent pas. Bob reçoit également les deux messages et nous supposons qu'il ne souhaite conserver que le message $M_A$. Pour être sûr que $M_A$ provient d'une source autorisée par un tiers de confiance, Bob lance un protocole challenge/réponse de la manière suivante. Bob génère un nombre aléatoire C (le challenge) puis il le diffuse sur le réseau. Alice et Charlie reçoivent tous deux le challenge C.

Au préalable, nous supposons que le tiers de confiance a délivré à Alice et Charlie une fonction G de calcul de réponse et a délivré à Bob une fonction H correspondante de vérification de réponse telle que cette fonction H retourne 0 si la réponse est incorrecte et 1 si la réponse est correcte.

Lorsque Alice et Charlie reçoivent le challenge C émis par Bob, ils calculent respectivement des réponses $R_A$ et Rc comme suit :

$$\text{Alice} : R_A = G(IdEvent_A, C) ;$$
$$\text{Charlie} : R_C = G(IdEvent_C, C) ;$$

puis ils envoient respectivement les réponses $R_A$ et $R_C$ à Bob.

Bob vérifie ensuite chaque réponse en calculant $H(C, R_X, IdF\text{-}vent_A)$ pour X = A et C. Si tous les résultats retournés par la fonction H sont nuls, alors Bob ne conserve pas le message $M_A$ qui est considéré comme ne provenant pas d'une source sûre. Par contre, si au moins un résultat retourné par H est égal à 1 (dans l'exemple, il s'agira de $H(C, R_A, IdEvent_A)$), alors Bob accepte le message $M_A$ car il est assuré qu'il provient d'un émetteur autorisé par le tiers de confiance.

Selon un second scénario, un émetteur, Alice, diffuse un message $M_A$ accompagné d'un identifiant $IdEvent_A$ sur un réseau auquel est raccordé un récepteur Bob et une entité intermédiaire, que nous appellerons Déborah. Dans un premier temps, nous supposons que Bob n'est pas intéressé par le message $M_A$ et qu'il ne le conserve pas. Déborah par contre enregistre le message $M_A$ et son identifiant $IdEvent_A$.

Plus tard, alors qu'Alice ne diffuse plus de message, nous supposons que Déborah diffuse le message $M_A$ enregistré et son identifiant $IdEvent_A$ sur le réseau. Alice étant seulement un émetteur ne conserve pas $M_A$. Bob reçoit $M_A$ et souhaite le conserver. Pour s'assurer qu'il provient d'une source autorisée par un tiers de confiance, Bob tance un protocole challenge/réponse de la manière suivante. Bob génère un nombre aléatoire C (le challenge) puis il le diffuse sur le réseau.

Au préalable, nous supposons que le tiers de confiance a délivré à Alice et Déborah une fonction G de calcul de réponse et a délivré à Bob une fonction H correspondante de vérification de réponse telle que cette fonction H retourne 0 si la réponse est incorrecte et 1 si la réponse est correcte.

Alice et Déborah reçoivent le challenge C. Comme Alice n'est pas en train de diffuser un message, elle ne tient pas compte du challenge C. Déborah par contre calcule une réponse $R_D = G(IdEvent_A, C)$ et envoie cette réponse à Bob. Bob vérifie ensuite cette réponse en calculant $H(C, R_D, IdEvent_A)$. Si la fonction H retourne 0, alors Bob ne conserve pas le message $M_A$. En revanche, si la fonction H retourne 1, alors Bob accepte le message $M_A$ qui est considéré comme provenant d'une source autorisée.

On notera que dans les deux scénarios exposés ci-dessus, l'entité récepteur Bob, même s'il est capable de répondre à la source du message, ne sait pas si le message qu'il reçoit provient d'un émetteur (comme Alice) ou d'un intermédiaire (comme Déborah) et surtout il ne connaît pas l'identité du diffuseur du message $M_A$.

Nous allons maintenant décrire un exemple plus concret de mise en oeuvre de l'invention en référence à la figure 1 où sont représentés un décodeur STB (de l'anglais « Set Top Box ») 1, un récepteur de télévision numérique DTV (de l'anglais « Digital Television ») 2 et un dispositif d'enregistrement SU (de l'anglais « Storage Unit ») 3.

Nous supposons que les données diffusées sur ce réseau représentent des programmes audiovisuels composés de flux élémentaires Audio et Vidéo transportés dans un flux de transport de données tel que défini dans la norme ISO/IEC 13818-1 « *Information technology - Generic coding of moving pictures and associated audio information : Systems* ».

Le décodeur 1 représente un émetteur de données sur le réseau, il émet des données qu'il reçoit par exemple d'une antenne satellite ou d'une connexion au câble. Le téléviseur numérique 2 représente un récepteur de données sur le réseau. Le dispositif d'enregistrement 3 représente quant à lui un dispositif intermédiaire capable de rediffuser sur le réseau des données reçues d'un autre dispositif émetteur du réseau.

Ces trois dispositifs sont raccordés à un bus numérique 4, par exemple un bus selon la norme IEEE 1394, et forment ainsi un réseau domestique numérique. Les messages diffusés dans le réseau sont envoyés à travers le canal isochrone du bus 4 et les messages qui sont adressés sont envoyés à travers le canal asynchrone du bus 4.

Le tiers de confiance qui délivre une fonction G de calcul de réponse à un protocole challenge/réponse aux dispositifs émetteurs ou intermédiaires du réseau (dans notre exemple, le décodeur 1 et le dispositif d'enregistrement 3) et qui délivre une fonction H de vérification de réponse aux dispositifs récepteurs du réseau (dans notre exemple le téléviseur numérique 2) est par exemple le fabriquant des dispositifs.

En ce qui concerne le choix des fonctions G et H, nous envisagerons trois modes de réalisation.

Selon un premier mode de réalisation préféré, la fonction G est une fonction publique qui utilise une clé secrète K pour calculer une réponse R à partir d'un challenge C et d'un identifiant IdEvent (i.e. $R = G_K(C, IdEvent)$). Pour garantir que les dispositifs émetteurs ou intermédiaires sont des appareils conformes, autorisés par le tiers de confiance, le secret K est inséré dans ces dispositifs, dans une zone de stockage sécurisée qui ne doit plus être accessible ultérieurement (par exemple dans un processeur sécurisé, notamment inclus dans une carte à puce).

La fonction H est dans ce cas une fonction qui calcule une réponse R' à partir du challenge C et de l'identifiant IdEvent en appliquant la fonction G avec la clé secrète K et qui compare ensuite le résultat R' avec la réponse R reçue. H est une fonction booléenne qui délivre une valeur nulle « 0 » si R' est différent de R et qui délivre une valeur « 1 » si R' est égal à R. Dans ce cas, la clé secrète K doit aussi être insérée au préalable par le tiers de confiance dans les dispositifs récepteurs.

Une fonction G correspondant à la définition ci-dessus peut être notamment une fonction de chiffrement telle que la fonction AES décrite notamment dans « *FIPS 197: Specification of the Advanced Encryption Standard (AES) -26 novembre 2001* » disponible à l'adresse Internet suivante : *http://csrc.nist.gov/publications/fips/fips197/fips-197.pdf*. Il peut également s'agir d'une fonction de hachage telle que la fonction HMAC-SHA1 décrite notamment dans « *FIPS Publication 198: The Keyed-Hash Message Authentication Code (HMAC), National Institute of Standards and Technology, 2001* » disponible à l'adresse Internet suivante : *http://csrc.nist.gov/publications/fips/fips198/fips-198a.pdf*.

Dans un second mode de réalisation, la fonction G est une fonction secrète qui est insérée dans les dispositifs émetteurs ou intermédiaires considérés comme conformes et autorisés par le tiers de confiance. Préférentiellement, cette fonction doit être choisie de manière à être très difficilement retrouvée par l'analyse des produits qui la contiennent. De plus cette fonction doit être résistante aux attaques adaptatives à texte clair choisi (plus connues sous le nom anglais de « adaptive chosen-plaintext attacks »).

De même que dans le premier mode de réalisation, la fonction H est dans ce cas une fonction booléenne qui calcule une réponse R' à partir du challenge C et de l'identifiant IdEvent en appliquant la fonction G secrète et qui compare ensuite le résultat R' avec la réponse R reçue, délivrant une valeur nulle « 0 » si R' est différent de R et délivrant une valeur « 1 » si R' est égal à R. Dans ce mode de réalisation, la fonction secrète G doit donc aussi être insérée au préalable par le tiers de confiance dans les dispositifs récepteurs.

Dans un troisième mode de réalisation, les fonctions G et H sont des fonctions publiques utilisant une paire de clés asymétrique (clé privée/clé publique). La fonction G est par exemple une fonction de génération de signature à l'aide d'une clé privée et la fonction H est une fonction de vérification de signature à l'aide de la clé publique correspondante.

Nous utiliserons par exemple les fonctions de signature RSA (acronyme du nom des créateurs Rivest, Shamir et Adleman) comme suit :

$$R = G(C, IdEvent) = RSASign_{KPRI}(C, IdEvent)$$

et

$$H(C, R, IdEvent) = RSAVerif_{KPUB}(C, R, IdEvent);$$

où KPRI et KPUB sont la clé privée et la clé publique d'une même paire de clé RSA.

Dans ce cas, la clé privée est insérée dans les dispositifs émetteurs ou intermédiaires du réseau par le tiers de confiance et la clé publique est insérée dans les dispositifs récepteurs du réseau.

Nous supposerons dans la suite que le premier mode de réalisation a été choisi dans lequel la fonction G est la fonction HMAC-SHA1 et qu'une clé secrète K est incluse dans une zone de stockage inviolable du décodeur STB 1, du récepteur de télévision numérique DTV 2 et du dispositif d'enregistrement SU3.

Premier scénario : le STB transmet directement un programme au DTV

Comme illustré à la figure 2, lorsque l'utilisateur du décodeur STB 1 sélectionne un nouveau programme pour qu'il soit diffusé dans le réseau, le STB génère aléatoirement un identifiant de programme IdEvent (étape 20), qui est préférentiellement un nombre de 128 bits et il insère cet identifiant dans des messages contenus dans les paquets de transport des données représentant le programme. Le flux de transport de données est ensuite diffusé sur le réseau (sur le canal isochrone du bus 4) lors de l'étape 21. Il est reçu par le téléviseur numérique DTV 2 qui extrait des paquets de données reçus les messages contenant l'identifiant pour finalement récupérer cet identifiant IdEvent (étape 22).

Le DTV génère alors à l'étape 23 un challenge C, qui est préférentiellement un nombre aléatoire de 128 bits, et il diffuse ce challenge C sur le réseau lors de l'étape 24. Lorsque le STB reçoit le challenge C, il calcule à l'étape 25 la réponse :

$$R = G(C, IdEvent),$$

ou plus précisément :

$$R_{STB} = HMAC\text{-}SHA1_K(C, IdEvent)$$

et adresse cette réponse au DTV par le canal asynchrone du bus 4 (étape 26).

Le dispositif d'enregistrement SU 3, qui reçoit également le challenge C ne répond pas puisqu'il n'est pas en train de diffuser des données.

Lorsque le DTV reçoit la réponse R=$R_{STB}$ du STB, il applique la fonction H (R, C, IdEvent) pour vérifier la réponse R (étape 27), ce qui revient à calculer :

$$R_{DTV} = HMAC\text{-}SHA1_K(C, IdEvent)$$

et à comparer ce résultat à la réponse $R_{STB}$ reçue. Si les deux valeurs sont les mêmes, alors le DTV considère que le programme reçu provient d'un émetteur autorisé par le tiers de confiance et peut être présenté à l'utilisateur. Sinon, le DTV n'affiche pas à l'utilisateur le programme reçu. Si le DTV ne reçoit aucune réponse après qu'un délai prédéterminé se soit écoulé depuis l'envoi du challenge C sur le réseau, il bloque également l'affichage du programme reçu.

A la fin du protocole, le challenge C et l'identifiant IdEvent sont effacés des mémoires du STB et du DTV.

Second scénario : le STB transmet un programme qui est stocké par le SU qui le diffuse ultérieurement au DTV.

Ce scénario est illustré par la figure 3.

Dans un premier temps, on suppose que l'utilisateur du STB sélectionne un nouveau programme. Le STB génère alors un identifiant IdEvent (étape 30) comme dans le premier scénario ci-dessus et il insère cet identifiant dans des messages inclus dans les paquets de transport des données représentant le programme avant de diffuser le flux de transport de données sur le réseau (étape 31).

Le SU enregistre ensuite le flux de données représentant le programme. L'utilisateur a par exemple choisi de ne pas visualiser tout de suite le programme qui est diffusé par le décodeur et préfère l'enregistrer pour le relire plus tard.

Dans un deuxième temps, l'utilisateur souhaite relire le programme enregistré. Le SU diffuse donc le programme sur le réseau lors d'une étape 32. Le DTV reçoit les paquets de données et en extrait les messages contenant l'identifiant IdEvent à l'étape 33.

Le DTV génère ensuite un challenge C comme dans le premier scénario (étape 34) et il diffuse ce challenge sur le réseau (étapes 35, 35').

Le SU reçoit ce challenge C, il calcule donc à l'étape 36 la réponse :

$$R = G(C, \text{IdEvent}),$$

ou plus précisément :

$$R_{SU} = \text{HMAC-SHA1}_K(C, \text{IdEvent})$$

et adresse cette réponse au DTV par le canal asynchrone du bus 4 (étape 37).

Le STB qui n'est pas en train de diffuser des données ne répond pas au challenge C qu'il reçoit également.

Lorsque le DTV reçoit la réponse $R=R_{SU}$ du SU, il applique la fonction H (R, C, IdEvent) pour vérifier la réponse R (étape 38), ce qui revient à calculer :

$$R_{DTV} = \text{HMAC-SHA1}_K(C, \text{IdEvent})$$

et à comparer ce résultat à la réponse $R_{SU}$ reçue. Si les deux valeurs sont les mêmes, alors le DTV considère que le programme reçu provient d'un émetteur autorisé par le tiers de confiance et peut être présenté à l'utilisateur. Dans le cas contraire ou dans le cas où aucune réponse n'a été reçue après un délai prédéterminé suivant l'envoi du challenge C par le DTV, ce dernier n'affiche pas à l'utilisateur le programme reçu.

On notera que lorsque le STB a terminé de diffuser le programme dans le premier temps, il efface ensuite l'identifiant IdEvent de sa mémoire.

A la fin du protocole, le challenge C et l'identifiant IdEvent sont également effacés des mémoires du SU et du DTV.

Dans une variante de réalisation de l'invention, notamment dans les deux scénario exposés ci-dessus, il est possible de remplacer l'étape de diffusion sur le réseau du challenge C calculé par le DTV par une étape d'envoi de ce challenge C à l'émetteur des données (le STB dans le premier scénario ou le SU dans le deuxième scénario). Dans ce cas, seul l'émetteur des données reçoit le challenge C. En effet, les protocoles existants de gestion des réseaux numériques permettent à un récepteur de données de répondre à la source des données sans pour autant connaître son identité.

Le récepteur des données diffuse sur le réseau, en plus du challenge C, l'identifiant IdEvent associé aux données qu'il a reçu (par exemple à l'étape 24 dans la figure 2 ou à l'étape 35, 35' dans la figure 3). Chaque appareil émetteur du réseau qui reçoit le challenge C et l'identifiant IdEvent vérifie s'il doit répondre à ce challenge en comparant l'identifiant IdEvent reçu avec celui qu'il vient éventuellement de générer pour diffuser des données. L'émetteur ne répond que si l'identifiant reçu avec le challenge correspond à son identifiant IdEvent courant. Ceci permet d'éviter que tous les émetteurs qui diffusent des données dans le réseau ne répondent lorsqu'un challenge C est envoyé par un récepteur.

L'invention présente notamment les avantages suivants :

Même si plusieurs dispositifs émetteurs ou intermédiaires sont raccordés au réseau, seul celui qui a été autorisé par le tiers de confiance et qui a émis les données est capable de répondre au protocole challenge/réponse initié par le récepteur des données.

Le protocole ne divulgue aucune information concernant l'émetteur au récepteur. Ceci permet d'atteindre l'objectif d'une authentification anonyme du dispositif émetteur.

Le protocole repose uniquement sur la couche application et ne requiert aucune particularité au niveau de la couche transport des données.

**Revendications**

1.  Procédé pour vérifier que des données reçues par un récepteur (2) ont été envoyées par un émetteur (1, 3) autorisé par un tiers de confiance, l'émetteur et le récepteur étant raccordés à un réseau numérique, et un identifiant (IdEvent) des données envoyées par l'émetteur étant envoyé avec lesdites données, le procédé comprend les étapes consistant, pour le récepteur (2), à :

    a) générer un nombre aléatoire (C) ;
    b) diffuser sur le réseau ledit nombre aléatoire et ledit identifiant (IdEvent) ;
    c) recevoir de l'émetteur une réponse (R) calculée en appliquant une première fonction (G) audit nombre aléatoire (C) et audit identifiant (IdEvent) ;
    d) vérifier la réponse (R) reçue en appliquant une seconde fonction (H) à la réponse reçue (R), audit nombre aléatoire (C) et audit identifiant (IdEvent) ;

    la première fonction (G) ayant été au préalable délivrée à l'émetteur par le tiers de confiance et la seconde fonction (H) étant une fonction de vérification du résultat de la première fonction, délivrée au préalable par le tiers de confiance au récepteur.

2.  Procédé selon la revendication 1, **caractérisé en ce que** le récepteur interdit l'accès aux dites données si la réponse (R) reçue à l'étape (c) n'est pas correcte ou si aucune réponse n'est reçue après l'expiration d'un délai prédéterminé à compter de l'émission du nombre aléatoire (C).

3.  Procédé pour prouver que des données envoyées à un récepteur (2) ont été émises par un émetteur (1, 3) autorisé par un tiers de confiance, l'émetteur et le récepteur étant raccordés à un réseau numérique, et un identifiant (IdEvent) des données envoyées par l'émetteur étant envoyé avec lesdites données, le procédé comprend les étapes consistant, pour l'émetteur (1, 3) à :

    a) recevoir du récepteur (2) un nombre aléatoire (C) et ledit identifiant (IdEvent) ;
    b) calculer une réponse (R) en appliquant une première fonction (G) audit nombre aléatoire (C) et audit identifiant (IdEvent) ;
    c) envoyer ladite réponse (R) au récepteur (2) ;

    ladite réponse étant susceptible d'être vérifiée par le récepteur en appliquant une seconde fonction (H) à la réponse (R) reçue, audit nombre aléatoire (C) et audit identifiant (IdEvent) ;
    la première fonction (G) ayant été au préalable délivrée à l'émetteur par le tiers de confiance et la seconde fonction (H) étant une fonction de vérification du résultat de la première fonction, délivrée au préalable par le tiers de confiance au récepteur,
    les étapes b) et c) n'étant effectuées que si ledit identifiant reçu à l'étape a) correspond à l'identifiant des données que l'émetteur vient d'envoyer.

4.  Procédé selon l'une des revendications précédentes, **caractérisé en ce que** l'identifiant des données envoyées par l'émetteur est un nombre aléatoire généré par l'émetteur initial des données dans le réseau et attaché aux dites données par l'émetteur initial.

5.  Procédé selon l'une des revendications précédentes, **caractérisé en ce que** la première fonction (G) est une fonction publique utilisant une clé secrète.

6.  Procédé selon la revendication 5, **caractérisé en ce que** la seconde fonction (H) est une fonction booléenne calculant une réponse attendue en appliquant audit nombre aléatoire (C) et audit identifiant (IdEvent) la première fonction (G) avec la clé secrète et
    comparant la réponse attendue à la réponse reçue pour délivrer :

    - une valeur « 0 » si les réponses attendue et reçue sont différentes et
    - une valeur « 1 » si les réponses attendue et reçue sont égales.

7.  Procédé selon l'une des revendications 1 à 4, **caractérisé en ce que** la première fonction (G) est une fonction secrète.

8.  Procédé selon la revendication 7, **caractérisé en ce que** la seconde fonction (H) est une fonction booléenne

calculant une réponse attendue en appliquant audit nombre aléatoire (C) et audit identifiant (IdEvent) la première fonction (G) et

comparant la réponse attendue à la réponse reçue pour délivrer :

- une valeur « 0 » si les réponses attendue et reçue sont différentes et
- une valeur « 1 » si les réponses attendue et reçue sont égales.

**9.** Procédé selon l'une des revendications 1 à 4, **caractérisé en ce que** la première fonction (G) est une fonction publique de génération de signature à l'aide d'une clé privée.

**10.** Procédé selon la revendication 9, **caractérisé en ce que** la seconde fonction (H) est une fonction publique de vérification de signature à l'aide d'une clé publique correspondant à la clé privée utilisée par la première fonction.

**Claims**

**1.** Method for verifying that data received by a receiver (2) have been sent by a transmitter (1, 3) authorized by a trusted third party, the transmitter and the receiver being connected to a digital network, an identifier (IdEvent) for the data sent by the transmitter being sent with the data, the method comprising, the steps consisting, for the receiver (2), in:

(a) generating a random number (C);
(b) transmitting said random number and said identifier (IdEvent) over the network;
(c) receiving from the transmitter a response (R) computed by applying a first function (G) to said random umber (C) and to said identifier (IdEvent);
(d) verifying the received response (R) by applying a second function (H) to the received response (R), to said random number (C) and to said identifier (IdEvent);

the first function (G) having previously been delivered to the transmitter by the trusted third party and the second function (H) being a function for verifying the result of the first function, previously delivered by the trusted third party to the receiver.

**2.** Method according to claim 1, **characterized in that** the receiver inhibits access to said data if the response (R) received in the step (c) is not correct or if no response is received after the expiry of a predetermined time starting from the transmission of the random number (C).

**3.** Method for proving that data sent to a receiver (2) has been transmitted by a transmitter (1, 3) authorized by a trusted third party, the transmitter and the receiver being connected to a digital network, an se identifier (IdEvent) for the data sent by the transmitter being sent with the data, the method comprising the steps consisting, for the transmitter (1, 3) in:

(a) receiving from the receiver (2) a random number (C) and said identifier (IdEvent),
(b) computing a response (R) by applying a first function (G) to said random number (C) and to said identifier (IdEvent);
(c) sending said response (R) to the receiver (2);

said response being liable to be verified by the receiver by applying a second function (H) to the received response (R), to said random number (C) and to said identifier (IdEvent).
the first function (G) having previously been delivered to the transmitter by the trusted third party and the second function (H) being a function for verifying the result of the first function, previously delivered by the trusted third party to the receiver;
the steps b) and c) being carried out only if said identifier received in step a) corresponds to the data identifier that the transmitter has just sent.

**4.** Method according to any one of the preceding claims, **characterized in that** the identifier for the data sent by the transmitter is a random number generated by the initial transmitter of the data in the network and attached to said data by the initial transmitter.

5. Method according to any one of the preceding claims, **characterized in that** the first function (G) is a public function using a secret key.

6. Method according to claim 5, **characterized in that** the second function (H) is a boolean function
computing an expected response by applying to said random number (C) and to said identifier (IdEvent) the first function (G) with the secret key and
comparing the expected response with the response received in order to deliver:

   - a "0" value if the expected and received responses are different and
   - a "1" value if the expected and received responses are equal.

7. Method according to one of claims 1 to 4, **characterized in that** the first function (G) is a secret function.

8. Method according to claim 7, **characterized in that** the second function (H) is a boolean function
computing an expected response by applying the first function (G) to said random number (C) and to said identifier (IdEvent) and
comparing the expected response with the received response in order to deliver:

   - a "0" value if the expected and received responses are different and
   - a "1" value if the expected and received responses are equal.

9. Method according to one of claims 1 to 4, **characterized in that** the first function (G) is a public function for signature generation with the aid of a private key.

10. Method according to claim 9, **characterized in that** the second function (H) is a public function of signature verification by means of a public key corresponding to the private key used by the first function.

**Patentansprüche**

1. Verfahren zum Verifizieren, dass von einem Empfänger (2) empfangene Daten von einem Sender (1, 3) gesendet wurden, der durch einen Vertrauensdritten authorisiert ist, wobei der Sender und der Empfänger an ein digitales Netzwerk angeschlossen sind und eine Kennung (IdEvent) der durch den Sender gesendeten Daten mit den Daten gesendet wird, wobei das Verfahren die Schritte umfasst, die für den Empfänger (2) darin bestehen,

   a) eine Zufallszahl (C) zu erzeugen,
   b) die Zufallszahl und die Kennung (IdEvent) über das Netzwerk zu verbreiten,
   c) von dem Sender eine Antwort (R) zu empfangen, die durch Anwendung einer ersten Funktion (G) auf die Zufallszahl (C) und die Kennung (IdEvent) berechnet wird,
   d) die empfangene Antwort (R) durch Anwendung einer zweiten Funktion (H) auf die empfangene Antwort (R), die Zufallszahl (C) und die Kennung (IdEvent) zu verifizieren,

   wobei die erste Funktion (G) zuvor an den Sender durch den Vertrauensdritten abgegeben wurde und die zweite Funktion (H) eine Funktion der Verifizierung des Ergebnisses der ersten, zuvor durch den Vertrauensdritten an den Empfänger abgegebenen Funktion ist.

2. Verfahren nach Anspruch 1, **dadurch gekennzeichnet, dass** der Empfänger den Zugang zu den Daten verbietet, wenn die in Schritt (c) empfangene Antwort (R) nicht korrekt ist oder wenn nach Ablauf einer vorbestimmten Frist ab Sendung der Zufallszahl (C) keine Antwort empfangen wird.

3. Verfahren zum Nachweisen, dass an einen Empfänger (2) gesendete Daten von einem Sender (1, 3) gesendet wurden, der durch einen Vertrauensdritten authorisiert ist, wobei der Sender und der Empfänger an ein digitales Netzwerk angeschlossen sind und eine Kennung (IdEvent) der durch den Sender gesendeten Daten mit den Daten gesendet wird, wobei das Verfahren die Schritte umfasst, die für den Sender (1, 3) darin bestehen,

   a) von dem Empfänger (2) eine Zufallszahl (C) und die Kennung (IdEvent) zu empfangen,
   b) eine Antwort (R) zu berechnen, indem eine erste Funktion (G) auf die Zufallszahl (C) und die Kennung (IdEvent) angewendet wird,

c) die Antwort (R) an den Empfänger (2) gesendet wird,

wobei die Antwort durch den Empfänger **dadurch** verifiziert werden kann, dass eine zweite Funktion (H) auf die empfangene Antwort (R), die Zufallszahl (C) und die Kennung (IdEvent) angewendet wird;

wobei die erste Funktion (G) zuvor an den Sender durch den Vertrauensdritten abgegeben wurde und die zweite Funktion (H) eine Funktion der Verifizierung des Ergebnisses der ersten, zuvor durch den Vertrauensdritten an den Empfänger abgegebenen Funktion ist,

wobei die Schritte b) und c) nur dann durchgeführt werden, wenn die in Schritt a) empfangene Kennung der Kennung der von dem Sender gerade ausgesendeten Daten entspricht.

4. Verfahren nach einem der vorhergehenden Ansprüche, **dadurch gekennzeichnet, dass** es sich bei der Kennung der durch den Sender gesendeten Daten um eine Zufallszahl handelt, die durch den ursprünglichen Sender der Daten in dem Netzwerk erzeugt wird und durch den ursprünglichen Sender mit den Daten verknüpft wird.

5. Verfahren nach einem der vorhergehenden Ansprüche, **dadurch gekennzeichnet, dass** die erste Funktion (G) eine öffentliche Funktion ist, die einen Geheimschlüssel verwendet.

6. Verfahren nach Anspruch 5, **dadurch gekennzeichnet, dass** es sich bei der zweiten Funktion (F) um eine boolesche Funktion handelt, die eine erwartete Antwort **dadurch** berechnet, dass die erste Funktion (G) mit dem Geheimschlüssel auf die Zufallszahl (C) und die Kennung (IdEvent) angewendet wird, und welche die erwartete Antwort mit der empfangenen Antwort vergleicht, um

- einen Wert "0" abzugeben, wenn die erwartete Antwort und die empfangene Antwort unterschiedlich sind, und
- einen Wert "1" abzugeben, wenn die erwartete Antwort und die empfangene Antwort gleich sind.

7. Verfahren nach einem der Ansprüche 1 bis 4, **dadurch gekennzeichnet, dass** es sich bei der ersten Funktion (G) um eine Geheimfunktion handelt.

8. Verfahren nach Anspruch 7, **dadurch gekennzeichnet, dass** es sich bei der zweiten Funktion (H) um eine boolesche Funktion handelt, die eine erwartete Antwort **dadurch** berechnet, dass die erste Funktion (G) auf die Zufallszahl (C) und die Kennung (IdEvent) angewendet wird, und welche die erwartete Antwort mit der empfangenen Antwort vergleicht, um

- einen Wert "0" abzugeben, wenn die erwartete Antwort und die empfangene Antwort unterschiedlich sind, und
- einen Wert "1" abzugeben, wenn die erwartete Antwort und die empfangene Antwort gleich sind.

9. Verfahren nach einem der Ansprüche 1 bis 4, **dadurch gekennzeichnet, dass** es sich bei der ersten Funktion (G) um eine öffentliche Funktion zum Erzeugen einer Signatur mit Hilfe eines Privatschlüssels handelt.

10. Verfahren nach Anspruch 9, **dadurch gekennzeichnet, dass** es sich bei der zweiten Funktion (H) um eine öffentliche Funktion der Signaturverifizierung mit Hilfe eines öffentlichen Schlüssels, der dem durch die erste Funktion verwendeten Privatschlüssel entspricht, handelt.

## Fig. 1

## Fig. 2

Fig. 3

EP 1 495 622 B1

**EP 1 495 622 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. MENEZES ; P. VAN OORSCHOT ; S. VANSTONE.** Handbook of Applied Cryptography. CRC Press, 1997